# EUROPEAN PATENT APPLICATION

(11) **EP 2 119 586 A2**
(43) Date of publication of application: **18.11.2009**
(21) Application number: 09156298.3
(22) Date of filing: 26.03.2009
(51) Int. Cl.: B60K 6/40, B60K 6/48, B60K 1/04, B60K 6/28, B60W 20/00, B60K 6/405, B60W 10/26

(54) **Hybrid industrial vehicle**

(30) Priority: 16.05.2008 JP 2008129481
(71) Applicant: KABUSHIKI KAISHA TOYOTA JIDOSHOKKI, Kariya-shi, Aichi 448-8761 (JP)
(72) Inventor: Katae, Kenichi, Kariya-shi Aichi 448-8671 (JP); Nishio, Jun, Kariya-shi Aichi 448-8671 (JP)
(74) Representative: TBK-Patent

(57) **Abstract**

The present invention provides a hybrid industrial vehicle (11) which prevents the battery (36) from water splash.

A hybrid industrial vehicle (11) has a combination of an engine (28) and a motor (30) as a drive source for load handling or traveling, a battery (36) as a power source for the motor (30) and a counterweight (W). The battery (36) is disposed on the counterweight (W) and is located above the center of the counterweight (W) as measured in the vertical direction between the highest and the lowest ends thereof.

## Description

### BACKGROUND OF THE INVENTION

The present invention relates generally to a hybrid industrial vehicle, and more particularly to a hybrid industrial vehicle such as a hybrid forklift truck which is characterized by an arrangement of a battery

Japanese Unexamined Patent Application Publication No. 11-222390 discloses a battery-powered forklift truck having a battery compartment which is formed below the floor for supporting the feet of an operator seated on the operator's seat and a battery accommodated in the battery compartment and having its top located lower than the floor.

In case of the battery-powered forklift having the battery arranged under the floor as disclosed in the above Publication, however, the floor is subjected to water splash during washing the vehicle with water. For preventing water from flowing into the battery compartment, any appropriate measures need to be taken, for example, sealing the gaps among the upper opening of the battery compartment, the battery hood and the toe board. However, such sealing makes it hard for the air to flow into the battery compartment and, therefore, difficult for the battery to be cooled.

In a hybrid industrial vehicle having a combination of an engine and a motor as a drive source for load handling or traveling, the engine as a heat generating source is installed inside the vehicle thereby, so that the ambient temperature inside the vehicle is increased during operation of the engine. When the battery is arranged under the floor, the ambient temperature of the battery located close to the engine is increased by the heat from the engine, so that it is difficult to cool the battery.

The present invention which has been made in light of the problems mentioned above is directed to providing a hybrid industrial vehicle which prevents the battery from water splash and simultaneously avoids an increase in the ambient temperature of the battery due to the heat from an engine.

### SUMMARY OF THE INVENTION

The present invention provides a hybrid industrial vehicle which prevents the battery from water splash.
A hybrid industrial vehicle has a combination of an engine and a motor as a drive source for load handling or traveling, a battery as a power source for the motor and a counterweight. The battery is disposed on the counterweight and is located above the center of the counterweight as measured in the vertical direction between the highest and the lowest ends thereof.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG.1A is a schematic side view of a forklift truck according to a preferred embodiment of the present invention;
FIG. 1B is a perspective view of a counterweight of the forklift truck of FIG. 1A;
FIG. 2A is a partially schematic side view of the forklift truck of FIG. 1A;
FIG. 2B is a schematic cross-sectional view taken along the line I-I of FIG. 2A;
FIG. 3 is a block diagram showing an electrical arrangement of the forklift truck; and
FIG. 4 is a graph showing the relation between the battery temperature and the output power of a battery.

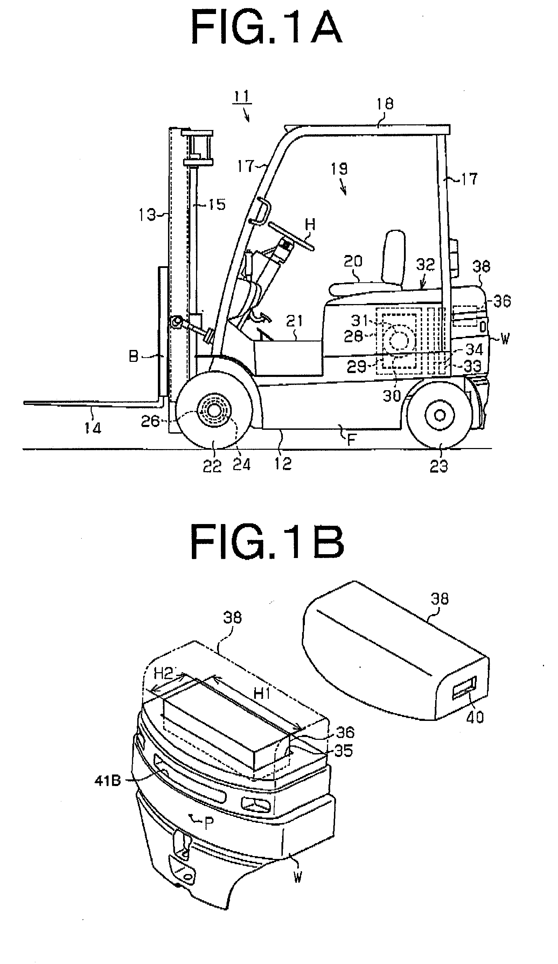

The following will describe a preferred embodiment of a hybrid forklift truck as an industrial vehicle according to the present invention with reference to FIGS. 1 through 4. In the following description, the references to directions or locations such as front, rear, left, right, up and down will be used as viewed from a forklift truck operator facing forward.

### DETAILED DESCRIPTION OF THE PREFERRED EMBODIMENT

Referring to FIG. 1A, reference numeral 11 designates a hybrid forklift truck (hereinafter referred to as "forklift truck") 11 having a vehicle body 12 and a mast assembly 13 located in the front of the vehicle body 12. The mast assembly 13 is equipped with a pair of forks 14 as an attachment movable up and down through lift brackets B for load handling operation. The forks 14 are moved together with the lift brackets B in accordance with the extending and retracting operation of lift cylinders 15. The vehicle body 12 has four pillars 17 and the pillars 17 on the front side are formed integrally with a headguard 18. An operator's seat 19 is provided in the space surrounded by the pillars 17 and the headguard 18. A toe board 21 is provided as a floor in front of the operator's seat 19 for supporting the operator's feet when the operator is seated.

The forklift truck 11 has two front driving wheels 22 and two rear steering wheels 23 at four corners of the vehicle body 12. Driving wheels 22 are driven to rotate by a drive motor 26 through a differential (not shown) and a gear (not shown) which are provided at an axle 24 of the forklift truck 11. Steering wheels 23 are steerable in accordance with the turning operation of a steering wheel H of the forklift truck 11.

The vehicle body 12 includes a body frame F and a counterweight W which is fixed to the rear of the body frame F. The body frame F is formed integrally by welding steel plates and the counterweight W is made of casting. An engine 28, a clutch 29, a motor 30 and a hydraulic pump 31 are fixed to the rear of the body frame F of the vehicle body 12 and covered with a hood 32.

In the forklift truck 11 of the present embodiment, the engine 28 is disposed in the rear of the vehicle body 12 and the motor 30 is connected to the engine 28 through the clutch 29. A radiator 33 for cooling coolant water for the engine 28 and a cooling fan 34 for the radiator 33 are provided on the rear side of the motor 30 and the engine 28.

The radiator 33 is fixed to the counterweight W by any suitable fixing means (not shown). The cooling fan 34 for the radiator 33 is located on the side of the radiator 33 opposite from the counterweight W and is fixed to the body frame F by any suitable fixing means (not shown). The cooling fan 34 is disposed adjacent to and in facing relation to the radiator 33 in longitudinal direction of the forklift truck 11 for blowing air to the radiator 33 thereby to cool coolant water in the radiator 33.

As shown in FIG. 1B, an accommodation recess 35 is formed in the top surface of the counterweight W so as to extend in the width direction of the vehicle body 12. A rectangular parallelepiped shaped battery 36 as a power source is mounted in the accommodation recess 35. The shape of the accommodation recess 35 is slightly larger than that of the battery 36 as seen from the top.

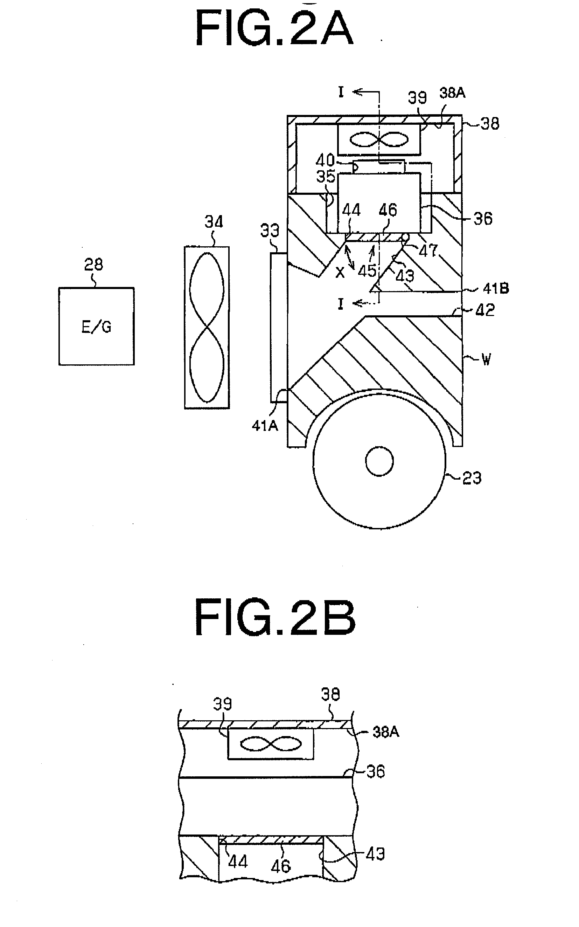

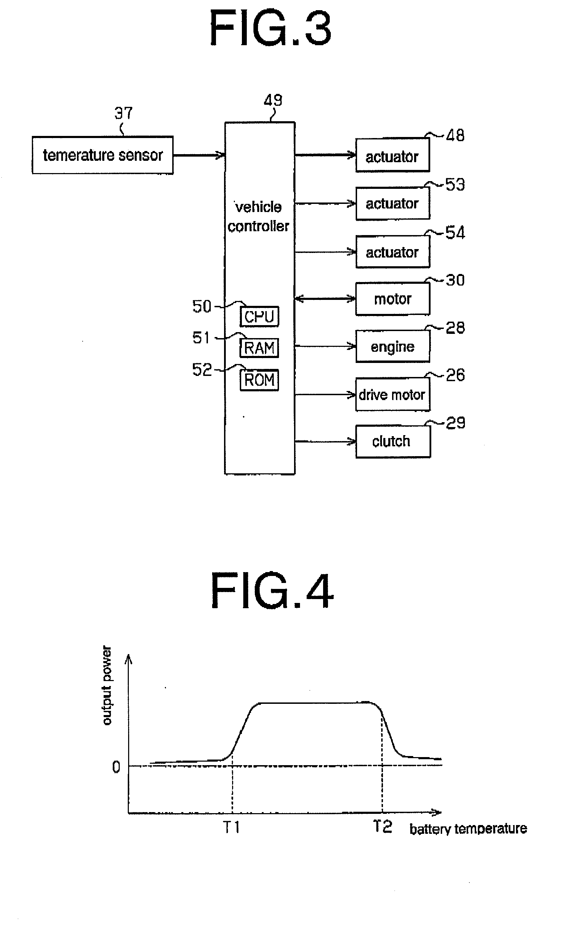

The battery 36 is located above the center P of the counterweight W as measured in the vertical direction thereof between the highest and the lowest ends of the counterweight W and a part of the battery 36 is located outside the accommodation recess 35. The battery 36 is formed so that its length H1 in the longitudinal direction thereof is shorter than the width of the counterweight W as measured in the width direction of the forklift truck 11 and the width H2 of the battery is shorter than the length of the counterweight W as measured in the longitudinal direction of the forklift truck 11. The battery 36 is configured to have therein a plurality of cells and, for example, a nickel metal hydride battery Is used as the battery 36. The battery 36 is equipped with a temperature sensor 37 (shown in FIG.3) as a temperature detecting device for detecting the surface temperature of the battery 36. The battery 36 is configured to supply drive power for traveling or load handling operation for the forklift truck11 when necessary. The battery 36 is covered with a battery protection cover 38 which has a substantially rectangular shape in plan view and is hollowed, as shown in FIG. 2A.

The cover 38 is formed so that the outer edges thereof match with those of the counterweight W, as shown in FIG. 1B, and installed on the top of the counterweight W. The cover 38 is detachably attached to the counterweight W and constitutes the upper rear part of the vehicle body 12 when attached to the counterweight W, as shown in FIGS. 1A and 1B. The cover 38 is formed with such a height that is substantially the same as that of the hood 32 when the cover 38 is attached to the counterweight W. Therefore, the cover 38 attached in place to the counterweight W will not hinder the visibility of the operator viewing rearwardly downward of the forklift truck 11. A cooling fan 39 for cooling the battery 36 is mounted to the inner upper surface 38A of the cover 38 as shown in FIG.2A.

The cooling fan 39 in operation blows air to the battery 36 thereby to cool the battery 36. The air blown by the cooling fan 39 is exhausted out of the cover 38 through a rectangular shaped communication hole 40 formed through a longitudinal end wall of the cover 38 shown in FIG. 1B.

The counterweight W has therethrough an outlet passage 42 through which warmed air passed through the radiator 33 is flowed outside and an inlet passage 43 which is branched from the outlet passage 42 and extends to the bottom of the accommodation recess 35. The outlet passage 42 is formed so as to provide fluid communication between a first opening 41A facing the radiator 33 and a second opening 41B formed in the rear of the counterweight W. The warmed air is blown from the radiator 33 outwardly through the outlet passage 42 and also towards the battery 36 through the inlet passage 43. As shown in FIG. 2B, a third opening 44 of the inlet passage 43 is formed in the accommodation recess 35 in such a way that the length thereof in the vehicle width direction is shorter than that of the accommodation recess 35. As shown in FIG. 2A, a switching device 45 is provided at the third opening 44 of the inlet passage 43 for selectively opening and closing the third opening 44.

The shape of the switching device 45 is substantially the same as that of the third opening 44 in plan view The switching device 45 includes a shutter 46 capable of closing the third opening 44, a hinge 47 rotatably supporting the shutter 46 and an actuator 48 (shown in FIG. 3) operable to pivot the shutter 46 in arrow directions X in FIG. 2A. When the actuator 48 is operated, the shutter 46 pivots on the hinge 47 downward to a position where the shutter 46 does not prevent the flow of the warmed air from the radiator 33 to the battery 36.

The electrical arrangement of the forklift truck 11 will be described. A vehicle controller 49 is mounted in the vehicle body 12 and operable to control the traveling and load handling operations of the forklift truck 11. As shown in FIG. 3, the vehicle controller 49 includes a CPU (Central Processing Unit) 50 executing control operations in accordance with predetermined procedures, RAM (Random Access Memory) 51 and ROM (Read Only Memory) 52 storing therein control programs for traveling and load handling operations of the forklift truck 11.

The temperature sensor 37 which outputs a temperature signal indicative of the surface temperature of the battery 36 is electrically connected to the vehicle controller 49. The vehicle controller 49 is configured to compute the temperature signal inputted from the temperature sensor 37 and also to determine the battery temperature. As shown in FIG.4, the battery 36 has such characteristics that the output power of the battery 36 decreases when the battery temperature is increased or decreased beyond the upper or lower limits of the range of normal temperatures. In other words, when the battery temperature is within the normal temperature range, the output power of the battery 36 is more than a predetermined value and that is strong enough for the vehicle to provide a normal operation. On the other hand, when the battery temperature is higher or lower than the normal temperature range, the output power of the battery 36 is restricted to less than 10% of the level when the battery temperature is within the normal temperature range. Thus, the output power decreases to an extent that affects the normal vehicle operation. The relation between input power of the battery 36 and a battery temperature is similar to that between output power of the battery 36 and a battery temperature. Therefore, the vehicle controller 49 is configured to send a control signal for increasing the battery temperature when the vehicle controller 49 determines that the battery temperature is lower than the lower limit T1 (e.g. 0°C) of the normal temperature range based on the battery surface temperature detected by the temperature sensor 37. Similarly, the vehicle controller 49 is configured to send a control signal for decreasing the battery temperature when the vehicle controller 49 determines that the battery temperature is higher than the upper limit T2 (e.g. 35-45°C) of the normal temperature range based on the battery surface temperature detected by the temperature sensor 37. As is obvious from the above, the normal temperatures range between T1 and T2.

As shown in FIG. 3, the actuator 48 for the switching device 45 for opening and closing the shutter 46, an actuator 53 for the cooling fan 34 of the radiator 33, an actuator 54 for the cooling fan 39 of the battery 36, the drive motor 26, the engine 28 and the motor 30 are also electrically connected to the vehicle controller 49. The vehicle controller 49 is configured to send control signals to the actuators 48,53,54, the engine 28, the motor 30 and the drive motor 26 and also to execute predetermined controls. The actuators 53,54 include, for example, a motor. The actuators 53,54 are configured to drive the cooling fan 34 for the radiator 33 and the cooling fan 39 for the battery 36, respectively, when the vehicle controller 49 sends a control signal thereto. The actuator 48 is configured to turn the shutter 46 when the vehicle controller 49 sends a control signal thereto.

The motor 30 is configured to be electively switched between the generating mode of accumulating (or charging) generated voltage in the battery 36 (rechargeable battery) (FIG. 1A) and the motor mode of driving the hydraulic pump 31 (FIG. 1 A) by receiving the drive power from the battery 36, depending on the control signal from the vehicle controller 49.

When the motor 30 is in the generating mode, the engine 28 functions as the power source for both the motor 30 and the hydraulic pump 31. In this generating mode, a control signal from the vehicle controller 49 enables the battery 36 to accumulate power generated by the motor 30. On the other hand, when the motor 30 is in the motor mode, the motor 30 functions as a motor and drives the forklift truck 11 by power from the battery 36. In this motor mode, a control signal from the vehicle controller 49 enables the battery 36 to supply power. In this state, the engine 28 and the motor 30 function as the power source for the hydraulic pump 31. In the motor mode, however, it is possible to use only the motor 30 as the power source for the hydraulic pump 31 with the clutch 29 kept disengaged. Controlling by the vehicle controller 49 to selectively switching between the motor 30 and the battery 36 is executed through an inverter assembly (not shown). Controlling of disengaging the clutch 29 is executed in response to a control signal from the vehicle controller 49. In the present embodiment, the battery 36 supplies power to the drive motor 26, thereby driving the forklift truck 11. The motor 30 and the engine 28 drive the hydraulic pump 31, thereby providing load handling operation.

The following will describe the operation of the forklift truck 11 constructed according to the embodiment. When the forklift truck 11 shown in FIG. 1A is washed with water, the toe board 21 is subjected to water splash and water may flows in under the toe board 21. However, because the battery 36 is not located below the toe board 21, but above the center P of the counterweight W, the battery 36 is prevented from being splashed with water.

The forklift truck 11 may be used in a cold district or in a cold storage warehouse. Under such a cold condition, when the forklift truck 11 is started by turning on the starting switch, the vehicle controller 49 is operated to determine the battery temperature based on the battery surface temperature detected by the temperature sensor 37. When the vehicle controller 49 determines that the battery temperature is lower than T1, the vehicle controller 49 gives a control signal to the engine 28 so as to run the engine 28 (idling state) and also a control signal to the actuator 53 so as to drive the cooling fan 34 for the radiaotor33. Simultaneously the vehicle controller 49 gives a control command to the actuator 48 so as to turn the switching device 45 to its opened position. Thus, part of the warmed air passed through the radiator 33 is introduced through the inlet passage 43 into the accommodation recess 35 for the battery 36, thereby warming the battery 36. The vehicle controller 49 monitors the battery temperature and, when the vehicle controller 49 determines that the battery temperature is increased to enter the normal temperature range, the vehicle controller 49 stops the operation of the engine 28 and simultaneously stops giving the control signal to the actuator 53 so as to stop the cooling fan 34 for the radiator 33. Simultaneously, the vehicle controller 49 stops giving the control signal to the actuator 48. Thus the switching device 45 is turned to the position in which the shutter 46 closes the third opening 44 of the inlet passage 43, thereby stopping warning the battery 36. While the switching device 45 is in its closed position, the warmed air is exhausted out of the counterweight W through the outlet passage 42.

The forklift truck 11 in operation is driven to travel by the drive motor 26 which receives power from the battery 36. In the load handling operation, the motor 30 and the engine 28 drive the hydraulic pump 31. During the operation, the engine 28 itself becomes a heat generating source. However, because the battery 36 is located at a distance from the engine 28, the ambient temperature of the battery 36 is not increased by the influence of the increased ambient temperature of the engine 28.

When the battery 36 is used for a long period of time or the ambient temperature of the forklift truck 11 is high, the battery temperature increases. Such increased battery temperature is harmful to the operation of the forklift truck 11. In the present embodiment, it is so arranged that, when the vehicle controller 49 determines that the battery temperature is higher than T2, the vehicle controller 49 gives a control signal to the actuator 49 so as to drive the cooling fan 39 for the battery 36. Thus, the cooling fan 39 blows air for cooling of the battery 36. The air used for cooling the battery 36 is exhausted outside the forklift truck 11 through the communication hole 40. If the vehicle controller 49 determines that the battery temperature is decreased to fall within the normal temperature range, the vehicle controller 49 stops the control signal to the actuator 54 so as to stop cooling the battery 36.

According to the embodiment, the following advantages are obtained.
(1) The battery is disposed in the accommodation recess 35 formed in the counterweight W and is located above the center P of the counterweight W. Therefore, the battery 36 is prevented from being splashed with water during washing the forklift truck 11 with water.
(2) Additionally, the counterweight W itself is located at a position in the forklift truck 11 which is less subjected to water splash during washing the forklift truck 11 with water. Therefore, the battery 36 even with a simplified water prevention is hardly to be splashed with water.
(3) The battery 36 is disposed at a distance from the engine as compared to a case in which the battery 36 is disposed under the toe board 21. Therefore, an increase in the ambient temperature of the battery 36 due to the influence of the engine 28 can be avoided.
(4) The temperature sensor 37 is mounted to the battery 36 and the outlet passage 42 and the inlet passage 43 are formed in the counterweight W. The switching device 45 is provided at the third opening 44 of the inlet passage 43 adjacent to the accommodation recess 35. When the battery temperature is lower than the lower limit T1 of the normal temperature range, the battery 36 can be warmed by the warmed air so that the battery temperature is increased to enter within the normal temperature range. If the temperature condition for beginning to warm the battery 36 is the same, the time before the battery temperature is increased to a normal temperature level can be reduced as compared to a case in which the battery temperature is increased by controlling the flow of current in and out of the battery 36 in and out repeatedly.
(5) When the battery temperature is lower than the lower limit T1 of the normal temperature range, the battery 36 is warmed by making use of the warmed air passed through the radiator 33. Therefore the battery 36 can be warmed without adding an extra device such as a heater to the forklift truck 11.
(6) The cooling fan 39 for the battery 36 is provided on the inner upper surface 38A of the top of the cover 38. When the vehicle controller 49 judges that the battery temperature is higher than the upper limit T2 of the normal temperature range, the vehicle controller 49 gives a control signal to the actuator 54 so as to drive the cooling fan 39 for the battery 36. When the vehicle controller 49 judges that the battery temperature is decreased to fall within the normal temperature range, the vehicle controller 49 stops the control signal to the actuator 54. Therefore, the battery 36 can be cooled until its temperature enters the normal temperature range.
(7) The battery 36 may be used in place of the counterweight W. The weight corresponding to the battery 36 can be reduced from the counterweight W.
(8) The cover 38 attached in place to the counterweight W is configured not to hinder the visibility of the operator viewing rearwardly downward of the backside of the forklift truck 11 in a state where the cover 38 is attached to the counterweight W. Therefore, with the battery 36 located above the center P of the counterweight W, rear view of the operator driving the forklift truck 11 backward will not be blocked.

The present invention is not limited to the foregoing embodiment, but it may be embodied in various ways as exemplified below. The timing of controlling the engine 28 to change from its standstill state to operating state may not necessarily be the time when the battery temperature is determined to be lower than the lower limit T1 (for example 0°C) of the normal temperature range. The control program of the vehicle controller 49 may be set so that the engine 28 is started at the same time when the vehicle is started to operate. In this case, since the engine 28 is always running while the vehicle is in operation, the battery 36 can be warmed by controlling the operation of the switching device 45 in such a way that it is opened when the vehicle controller 49 judges that the battery temperature is decreased below T1. The operation of warming the battery 36 can be stopped by closing the switching device 45 when the vehicle controller 49 judges that the battery temperature is increased to enter the normal temperature range.

An exhaust conduit may be arranged midway in the warmed air passage from the radiator 33 to the battery 36. In this structure, because the air warmed through heat exchange by contact with the exhaust conduit is sent to the battery 36, the battery 36 can be warmed more efficiently.

The outlet air passage 42 and the inlet air passage 43 may be formed of any part which is separate from the counterweight W. For example, a first pipe and a second pipe may be arranged in the holes which are used as the outlet air passage 42 and the inlet air passage 43 of the counterweight W, respectively, in such a way that the first pipe and the second pipe are in fluid communication with each other. By using the first and second pipes whose cross-sectional area is large enough for an amount of warmed air necessary for warming the battery 36 to pass through, the first pipe may serve as the outlet air passage 42 and the second pipe as the inlet air passage 43. Therefore, the battery 36 can be warmed by the warmed air passed through the radiator 33 and then to the battery 36 through the second pipe. In this case, the switching device 45 may be provided at an opening of the second pipe adjacent to the accommodation recess 35.

Instead of the motor 30, two motors for the generator and the hydraulic pump may be arranged independently and the hydraulic pump 31 may be configured to be driven by the engine 28 and the dedicated motor for the hydraulic pump 31.

The present invention may be applied not only to the forklift truck, but also in general to industrial vehicles having driving means for traveling and implement for specific working such as vehicles used for agriculture, civil engineering, load handling and the like.

In other words, the present invention may be applied to any hybrid industrial vehicle having a motor as driving means for traveling and an engine and a motor as driving means for load handling operation.

The battery 36 may not necessarily be a nickel metal hydride battery, but also any other suitable rechargeable battery such as a lithium-ion battery and a capacitor.

Therefore, the present examples and embodiment are to be considered as illustrative and not restrictive, and the invention is not to be limited to the details given herein but may be modified within the scope of the appended claims.

The present invention provides a hybrid industrial vehicle which prevents the battery from water splash.

A hybrid industrial vehicle has a combination of an engine and a motor as a drive source for load handling or traveling, a battery as a power source for the motor and a counterweight. The battery is disposed on the counterweight and is located above the center of the counterweight as measured in the vertical direction between the highest and the lowest ends thereof.

## Claims

1. A hybrid industrial vehicle comprising an engine, a motor, wherein a combination of the engine and the motor serves as a drive source for load handling or traveling, a battery as a power source for the motor, and a counterweight, **characterized in that** the battery is disposed on the counterweight and is located above the center of the counterweight as measured in the vertical direction between the highest and the lowest ends thereof.

2. The hybrid industrial vehicle according to claim 1, further comprising a toe board for supporting an operator's feet, **characterized in that** the battery is located above the toe board.

3. The hybrid industrial vehicle according to claim 1 or 2, **characterized in that** an accommodation recess is formed in a top surface of the counterweight, wherein the battery is disposed in the accommodation recess.

4. The hybrid industrial vehicle according to any one of claim 1 through 3, further comprising a radiator for the engine, **characterized by** a temperature sensor for the battery, an outlet passage wherein warmed air passed through the radiator is flowed outside of the hybrid industrial vehicle through the outlet passage, an inlet passage, wherein warmed air passed through the radiator is flowed towards the battery through the inlet passage, a switching device, wherein the switching device is provided in the inlet passage for selectively opening and closing the inlet passage; and a vehicle controller which controls the switching device for selectively opening and closing the inlet passage, based on battery temperature detected by the temperature sensor, wherein the vehicle controller turns the switching device to an opened position thereof so as to introduce the warmed air to the battery when the battery temperature detected by the temperature sensor is lower than a predetermined lower limit temperature.

5. The hybrid industrial vehicle according to claim 4, **characterized in that** the predetermined lower limit temperature corresponds to a lower limit temperature which enables the battery to supply power enough for operating the hybrid industrial vehicle.

6. The hybrid industrial vehicle according to claim 4 or 5, **characterized in that** the inlet passage and the outlet passage are formed in the counterweight.

7. The hybrid industrial vehicle according to any one of claim 4 through 6,
**characterized in that** the inlet passage is branched from the outlet passage and extends to the battery.

8. The hybrid industrial vehicle according to any one of claim 4 through 7,
**characterized in that** the switching device has a shutter capable of opening and closing the opening of the inlet passage, a hinge rotatably supporting the shutter and an actuator operable to pivot the shutter by receiving a control signal from the vehicle controller.

9. The hybrid industrial vehicle according to any one of claim 4 through 8,
**characterized by** a cooling fan for the battery and an actuator for the cooling fan, wherein the vehicle controller sends a control signal to the actuator for the cooling fan so as to drive the cooling fan for the battery when the battery temperature detected by the temperature sensor is higher than a predetermined upper limit temperature.

10. The hybrid industrial vehicle according to claim 9, **characterized in that** the predetermined upper limit temperature corresponds to an upper limit temperature which enables the battery to supply power enough for operating the hybrid industrial vehicle.

11. The hybrid industrial vehicle according to claim 9 or 10, comprising a cover for the battery, **characterized in** the cover is detachably attached to the counterweight and constitutes upper rear part of the hybrid industrial vehicle, the cooling fan for the battery is mounted to an inner surface of the cover.
